# EUROPEAN PATENT APPLICATION

(11) **EP 1 457 911 A1**
(43) Date of publication of application: **15.09.2004**
(21) Application number: 04251422.4
(22) Date of filing: 11.03.2004
(51) Int. Cl.: G06F 17/60

(54) **System and method for social interaction**

(30) Priority: 14.03.2003 US 389624
(71) Applicant: Nokia Corporation, 02150 Espoo (FI)
(72) Inventor: Jung, Younghee, 00180 Helsinki (FI); Persson, Per, 00180 Helsinki (FI); Paqvalén, Kenneth, 00180 Helsinki (FI)
(74) Representative: Read, Matthew Charles

(57) **Abstract**

Systems and methods whereby a user can learn of users with whom she is socially-related. For example a user might learn of users with whom she shares common acquaintances and/or with whom she shares having met various individuals. Further, systems and methods whereby a user can learn, for a specified user, if she and that specified user are socially-related. Through such queries, the user might also learn of the identities of the common acquaintances and/or commonly-met individuals.

Additionally, systems and methods whereby access to data stored on a machine associated with a user, such as the user's terminal, may be controlled, and systems and methods whereby a terminal user can learn if she is in the proximity of people that she had previously met.

## Description

### Field of Invention

This invention relates to systems and methods for facilitating social interaction.

### Background Information

In recent years, there has been an increase in the use of computers, such as mobile nodes, for interpersonal communications. For example, many individuals have come to rely upon electronic mail and messaging services in preference to conventional mail for textually-related communications. Similarly, many individuals have come to rely upon computer-provided telephony (e.g., mobile node-provided telephony) in preference to conventional landline telephones.

Further, there has been an increase in personal identification with computers. For instance, portable computers such as mobile telephones often hold data personal to a user such as an address book, a calendar, musical selections, images, games, custom ringtones, wallpaper, and the like.

In view, for example, of the increasing personal and interpersonal nature of computers, there may be interest in technologies that facilitate social interaction.

### Summary of the Invention

According to various embodiments of the present invention, there are provided systems and methods whereby a user can learn of users with whom she is socially-related. For instance, she may learn of users with whom she shares common acquaintances and/or with whom she shares having met various individuals.

Further according to various embodiments of the present invention, there are provided systems and methods whereby a user can learn, for a specified user, if she and that specified user are socially-related. For instance, she may learn if she and the specified user share one or more common acquaintances and/or had met the same individuals. Through such queries, the user might also learn of the identities of the common acquaintances and/or commonly-met individuals.

Further provided are systems and methods whereby access to data stored on a machine associated with a user, such as the user's node, may be controlled. Also provided are systems and methods whereby a node user can learn if she is in the proximity of people that she had previously met.

### Brief Description of the Drawings

Fig. 1 is a flow chart showing exemplary steps involved in social relation query according to embodiments of the present invention.
Fig. 2 is a flow chart showing exemplary steps involved in data access control according to embodiments of the present invention.
Fig. 3 is a flow chart showing exemplary steps involved in facilitating recognition of previously-met individuals according to embodiments of the present invention.
Fig. 4 shows an exemplary general purpose computer employable in embodiments of the present invention.
Fig. 5 shows a functional block diagram of an exemplary node employable in embodiments of the present invention.

### Detailed Description of the Invention

### General Operation

According to embodiments of the present invention, there are provided systems and methods wherein a query may be performed whereby a user can learn of other users with whom she shares in common one or more acquaintances. Through the query, the user might additionally learn of the identities of the acquaintances. Alternately or additionally, a query could be performed whereby a user could learn of acquaintances that she has in common with a specified user. A query could be performed whereby a user could, more generally, learn of users with which she shares things in common. For instance, the user could perform a query to learn of users having on their nodes one or more media items also existing on her node. Further, a query could be performed whereby a user could learn of things that she shares in common with a specified user.

Moreover, a query could, alternately or additionally, be performed whereby a user could learn of users who had met users that she had also met. Through the query, the identities of the commonly-met users might also be learned. Further alternately or additionally, a query could be performed whereby a user could learn of users that she and a specified user had both met.

In further embodiments of the present invention, access to data stored on a node or other machine associated with a user may be granted to other users in accordance with, for example, consideration of previous connections in which the machine associated with the user had previously been involved. As another example, such access might be granted to other users in accordance with the reputations of those users. As will be discussed in greater detail below, the determination of such reputations might take into account a number of factors.

Still further embodiments provide systems and methods whereby a node user may learn if she is in the proximity of people that she had previously met.

Various aspects of the present invention will now be discussed in greater detail.

### Social Relation Queries

As alluded to above, for various embodiments of the present invention a user may perform a social relation query. For instance, as noted above, according to various embodiments of the present invention there are provided systems and methods wherein a query may be performed whereby a user can learn of other users with whom she shares one or more common acquaintances, and perhaps the identities of those common acquaintances. As also noted above, according to various embodiments of the present invention a query may be performed whereby a user could learn of acquaintances she has in common with one or more specified users.

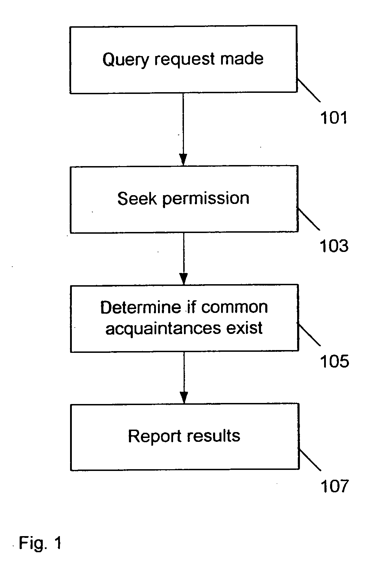

With respect to Fig. 1 it is noted that a user wishing to perform such a common acquaintance query might indicate her desire to do so via, for instance, a GUI (graphical user interface) provided by her node or the like (step 101). Where the user indicated that she wished to learn of acquaintances that she has in common with one or more specified node users, the node could, perhaps via the GUI, provide the user with a created list of users for whom query could be performed. After viewing the list, the user could select from the list the user or users she wishes to involve in the query. Where the user indicated that she wished to learn of users with which she shared one or more common acquaintances, the node might create the list but not show it to the user, and behave as if the user had selected all list entries.

The node might populate the list by employing a network interface to find accessible nodes capable of participating in such a query. The network interface might, for example, be a wireless interface such as, for example, a Bluetooth, 802.11a, 802.11b, 802.11g, IrDA (Infrared Data Association), or UMTS (Universal Mobile Telecommunications System) interface. The interface might also be a wired network interface such as, for instance, an Ethernet, 1394, or 1394b interface. The node might employ service discovery in finding such nodes. The user's node, upon finding a node, might query the found node as to the identity of its user and then present the identity to the user in the above-noted list.

The service discovery employed might be, for instance, Bluetooth Service Discovery, DNS-SD (Domain Name Service - Service Discovery), or SSDP (Simple Service Discovery Protocol). In such embodiments, nodes capable of participating in query could advertise this fact and/or reply affirmatively when queried as to whether or not it is capable of participating. It is noted that, in various embodiments, device discovery might be employed in finding nodes capable of participating. As a specific example, Bluetooth Device Discovery might be employed.

For various embodiments of the invention, permission might need to be sought from listed users. Accordingly, the querying user's node could dispatch to the nodes of the one or more users sought to be queried an invitation to participate in the common acquaintance query (step 103). Included in the invitation could be an identifier corresponding to the user initiating the query.

A node receiving the invitation could, in turn, seek permission from its user. Such permission could be sought, for instance, via a GUI associated with the node. Upon receiving the response from its user, the node receiving the invitation could inform the query-requesting node of the response. In the case where permission was received, the query could commence. In the case where permission was not received, the query-requesting node could notify its user of the fact that query with respect to that user could not proceed due to lack of permission from the target user.

It is noted that, in certain embodiments, a user could specify that her node automatically accept such invitations to participate. Similarly, in certain embodiments, a user might be able to specify that her node's advertisement of ability to participate in a common acquaintance query, and/or affirmative response to service discovery queries concerning such a query, indicate that permission to proceed with such a query is granted and/or does not need to be sought. For such embodiments, a querying user's node, receiving such an indication, might not perform the above noted steps relating to seeking permission. Further to this, various embodiments of the present invention may allow a query-requesting user to instruct her node to perform common acquaintance query only with respect to nodes that had indicated that permission to proceed with common acquaintance query had been granted and/or did not need to be sought.

Next, a determination could be made as to acquaintances common between the query-requesting user and each of the users with respect to whom that query was proceeding (step 105). The determination with respect to a queried user could be made, for instance, by comparing entries in an address book associated with the query-requesting user with entries in an address book associated with the queried user. Each address book might be stored on its user's node.

According to certain embodiments of the invention, the node of the queried user could dispatch to the node of the query-requesting user entries from its address book, one or more portions of each of these entries, and/or a unique identifier associated with each of these entities. The unique identifier could be, for instance, a network address, telephone number, email address, messaging address, and/or the like. As will be discussed in greater detail below, the entries, portions, and/or identifiers might be dispatched in a protected manner. It is noted that, for various embodiments, a node user could specify that certain of its address book entities not be made available to a query-requesting node in conjunction with such a query.

The query-requesting user's node could act to search for address book entries common to both its user's address book and the address book of the queried user, for instance, by searching its user's address book for entries corresponding to received entries, portions, and/or identifiers. Where no common entries were found, the query-requesting user could be informed by her node of this fact. Where common entries were found, the query-requesting user could be informed by her node that she had acquaintances in common with a queried user (step 107). The query-requesting user's node might additionally inform its user of the identity of that queried user. The query-requesting user's node might identify the queried user in a number of ways. For example, an image, name, messaging address, phone number, and/or other identifier corresponding to the queried user could be displayed to the query-requesting user via her node's GUI. As another example, an information card corresponding to the particular selected user could be displayed via the GUI.

Such an information card might be received from a queried user and include, for instance, an image, name, messaging address, phone number, and/or the like corresponding to the queried user. Such an information card might, for example, be dispatched in response to a service discovery query, along with an announcement that common acquaintance query is supported, and/or to a query-requesting user's node along with an affirmative response to a common acquaintance query invitation. In various embodiments, an information card could make one or more data items known to a query-requesting user's node, and perhaps employable by that user, but not visible to and/or accessible by that user. For example, an information card could include a phone number that could be employed by the query-requesting user to make a call, but which could not be viewed by that user.

As alluded to above, in addition to or as an alternative to identifying a queried user for whom common acquaintances had been found, the query-requesting user's node could identify the common acquaintances. For example, the query-requesting user' node could display to its user the address book entries, portions thereof, and/or unique identifiers corresponding to the common acquaintances.

It is noted that, in various embodiments, the query-requesting user's node might not act to perform the search for common address book acquaintances. Instead, for example, such search with respect to a particular queried user might be made by the node corresponding to that queried user. Accordingly, the node of the query-requesting user might send entries from its address book, one or more portions of each of these entries, and/or a unique identifier associated with each of these entities to the node corresponding to the particular queried user. The node corresponding to the particular queried user could act to search for common address book entries in a manner analogous to that discussed above.

Where common entries were found, the node corresponding to the particular queried user could dispatch to the node of the query-requesting user an indication that common acquaintances had been found. Alternately or additionally, one or more identifiers corresponding to the common acquaintances could be provided. It is noted that, for such embodiments, the query-requesting user might be able to specify that certain address book entries not be made available for the query. It is further noted that the entries, portions, and/or identifiers might be dispatched in a protected manner.

It is further noted, that in various embodiments, determination of common acquaintances might be determined neither by the node of the query-requesting user or the node of a queried user. Instead, such operations might be performed by a third device such as, for instance, a server. Such a server might be, for example, a trusted server. Accordingly, the third device might receive from the node of the query-requesting user entries from its user's address book, one or more portions of each of these entries, and/or a unique identifier associated with each of these entries. The third device could receive analogous information from the node of a queried user.

The entries, portions, and/or identifiers might be dispatched to the third device in a protected manner. The third device could act to determine address book entries common to the address book of the query-requesting user's node and the queried user's node. Where matches were found, the third device could dispatch to the node of the query-requesting user an indication of such, the indication perhaps containing information about the identity of the queried user. Alternately or additionally, one or more identifiers corresponding to the common acquaintances could be provided.

As was alluded to above, a query could be performed whereby a user could learn of users who had met users that she had also met. As was also alluded above, a query could be performed whereby a user could learn of users she and a specified user had both met. Such may be implemented, for instance, by having, nodes maintain logs relating to connections they have been involved in, and considering two users to have each met a third user when the node logs corresponding to those users each indicated connection with the node of the third user. Hence, such queries might be called "connection log queries".

Logged connections may include, for instance, telephone connections, messaging connections, and query connections. Recorded log data could include, for instance, connection type, connection duration, time and/or date of connection, the application and/or process that established the connection, the type and/or identity of data transferred during the connection, the physical location of the accessing or accessed machine during the connection, a phone number corresponding to the accessing user or node, and/or the identity of the accessing user (e.g., name, messaging address, or phone number), and/or the identity of the accessing node (e.g., network address or hardware address).

The logging for a particular node could be performed, for instance, by a daemon or other process running on that node. In certain embodiments, the process could monitor API (application program interface) or other calls made by communications processes (e.g., messaging or telephonic processes) running on the node. Alternately or additionally, such communications processes could be implemented so as to communicate various aspects of their activity to the logging process. Such communication could be, for instance, via various interprocess communication techniques known in the art. For instance, RMI (Remote Method Invocation), JMS (Java Messaging Service), SOAP, (Simple Object Access Protocol) sockets, and/or a distributed notification center could be employed.

Connection log queries might be carried out in a manner analogous to that described above with respect to of common acquaintance queries, but with comparison done between connection logs rather than address books. Accordingly, execution of a connection log query might include, for example, the node of a particular queried user dispatching entries from its connection log, one or more portions of each of these entries, and/or a unique identifier associated with each of these entities to the node of the query-requesting user. The unique identifier could be, for instance, a network address, telephone number, messaging address, and/or the like. As will be discussed in greater detail below, the entries, portions, and/or identifiers might be dispatched in a protected manner.

Execution of the query might further include, for example, the query-requesting user learning from her node the that she has met one or more users also met by the particular queried user. In a manner analogous to that discussed above with respect to common acquaintance query, the query-requesting user might be presented with an identifier corresponding to the particular queried user and/or identifiers corresponding to the one or more commonly-met users. It is noted that the query-requesting user might, alternately or additionally, be presented with additional information corresponding to each common log entry. For example, the query-requesting user might be informed that a common log entry corresponded to a common acquaintance query, connection log query, messaging connection, data transfer connection, or telephonic connection.

According to various embodiments of the present invention, support may be provided for communication between a query-requesting user and a user found via query to have acquaintances and/or connection log entries in common with the query-requesting user. For example, the query-requesting user's node could offer her a GUI option to establish such communications.

Such communications might, for example, be via email, MMS, or a telephonic connection. The query-requesting user's node might know of the messaging address, telephone number, or the like employable in establishing such a connection in a number of ways. For example, the query-requesting user's node might be able to access the messaging address or the like via its address book.

As another example, the messaging address or the like may have been previously received from the node to be contacted, perhaps via an information card. As another example, the query-requesting user's node might consult a server to learn of the messaging address or the like, perhaps providing the server with a piece of data (e.g., user's name or identifier of the user's node) corresponding to the user for which the messaging address or the like is sought. The communication could be performed using appropriate protocols known in the art, and could be dispatched, for example, over a UMTS or GPRS (General Packet Radio Service) network.

It is further noted that communication between the query-requesting user and the found user might be, for example, via a peer-to-peer (P2P) connection. Accordingly, the node of the query-requesting user might present her with the option to send a voice or text message to the found user via, for instance, Bluetooth, or an 802.11a, 802.11b, or 802.11g ad-hoc network. Such a message could be dispatched in a number of ways. For example, OBEX Object Push Profile (OPP) could be employed. As a specific example, query-requesting user could enter text to be sent via a keyboard, keypad, or digitizer associated with her node, and the resultant text could be dispatched to the node of the found user via OPP.

In a similar manner, the query-requesting user could enter a voice message via a microphone associated with her node, and the voice message could be dispatched to the found user via, for example, OPP. The voice message could be recorded in a known format such as, for example, QuickTime MobileVoice, or GSM. As another example, the node of the query-requesting user could present her with the option to engage in telephonic communications with the found user via a P2P connection. Such communications might, for instance, involve VoIP (Voice over Internet Protocol) and/or Bluetooth Network Encapsulation Protocol (BNEP).

Support may, according to various embodiments of the present invention, be provided for face-to-face communications between a query-requesting user and a user found via query. As noted above, a query-requesting user may receive an image corresponding to such a found user. The image could be received, for example, via an information card of the sort noted above. Such functionality could facilitate face-to-face communications as the query-requesting user could employ the image in visually locating from among the people around her the user found via query.

According to various embodiments of the present invention, guestbooks could be maintained for a node users. A user's guestbook could contain comments, left by other users, regarding that. For example, a first user could leave a message in a second user's guestbook complimenting the second user's taste in clothing or music. Various rules could be set for reading and writing to such guestbooks. For example, it could be established a user's guestbook be viewable by any user, but that only users whose nodes were in communication with her node could leave messages.

As another example, it could be established that a user's guestbook could be viewed by any user, but that only users whose nodes participated in a query with her node could leave messages. Such rules could, for example, be set globally so as to apply to all users or to groups of users. Alternately or additionally, such rules might be set on a user-by-user basis. The rules might, for instance, be set by a system administrator or the like.

Guestbook functionality could be implemented in a number of ways. For example, a user's guestbook might be located on her node. Alternately, a user's guestbook might be located on a central server or the like. In certain embodiments, a guestbook might be maintained as a webpage, hosted by a webserver software running on the machine where the guestbook is located. The webserver software might be, for example, Apache or Microsoft IIS (Internet Information Server).

Where the guestbook is maintained as a web page, a user wishing to view the guestbook might do so using web browsing software, such as web browsing software operating on her node that is pointed to the appropriate URL (Uniform Resource Locator), IP (Internet Protocol) address, or the like. The appropriate URL, IP address, or the like could be made known to users in a number of ways. For instance, such could be included on a user's information card. Accordingly, a hyperlink could be included in a received information card. A user's node could be configured so that selecting such a link would direct the node's web browser to the address specified by the hyperlink. The user might be able to select the link, as a specific example, by using a stylus to tap on the portion of his node's screen displaying the link.

Where the guestbook exists as a web page on a central server or the like, pointing web browsing software to the appropriate URL, IP address, or the like could result in display of a webpage having forms that could be employed to cause the central server or the like to find a desired guestbook. For example, a user could enter the name, messaging address, and/or phone number corresponding to a particular user. In response, the central server or the like could show that particular user's guestbook. Alternately, where the information entered into the forms was too ambiguous to direct the server to a particular user, the server could present a web page containing links to various users' guestbooks, allowing selection of the appropriate one.

Embodiments of the present invention might allow a user to enter in the GUI location field or the like of a browser operating on her node the phone number, messaging address, or the like corresponding to a user whose guestbook she wishes to access. The phone number or the like might be proceeded by a certain prefix such as, for example "phoneconnect://". In such embodiments, a DNS server with which the node connected could be programmed to resolve an entered phone number or the like corresponding to a particular user to the URL, IP address, or the like for the guestbook corresponding to that user. As alluded to above, the URL or the like might, for instance, point to webserver software operating on a server or on a node. The user employing the browser could be in possession of the phone number for a number of reasons. For example, the phone number could be received as part of an information card, could be in the user's address book, or be personally known by the user. It is noted that, in various embodiments, a phone number (e.g., one included with an information card) could be known by a user's node, and perhaps be employable by that user, but not be visible to the user.

Functionality whereby entries could be added to a user's guestbook could be implemented in a number of ways. For example, such entries could be entered via forms provided by a guestbook webpage. As a specific example, a user might be able to place a guestbook entry by typing it into one or more form fields and clicking a GUI button, perhaps labeled "post comment", provided by the web page. As another example, guestbook entries could be entered via a field or the like provided by the GUI or the like associated with one or more program modules. The one or more program modules could interface with the machine hosting the guestbook via, for instance, RMI, JMS, or SOAP. According to various embodiments of the present invention, in response to a user providing a guestbook entry, the machine hosting the guestbook might first consult a store to determine if the posting was allowable according to established rules for the guestbook.

For instance, if the guestbook rules stated that postings could only be made by users who had participated in a query with the user corresponding to the guestbook, the machine could act to see that this criterion was met. The machine might do this by acting to determine the identity of the user attempting to post a comment and/or the identity of that user's node, and consulting a listing including identifiers corresponding to users and/or nodes who had participated in query. In the case where a match was found, the posting could be allowed. Otherwise, it could be disallowed.

The identity of the user attempting to post a comment and/or the identity of that user's node could be determined in a number of ways. For example, one or more software modules operating on the machine hosting the guestbook could query the machine of the user seeking to post a comment for an identifier such as phone number, hardware address (e.g., Bluetooth address or MAC (Media Access Control) address), and/or network address (e.g., IP address). As another example, one or more software modules operating on the machine hosting the guestbook might be able to learn of the phone number, hardware address, and/or network address of the accessible machine by examination of the received packet headers or the like. As yet another example, the machine hosting the guestbook could query the user attempting to post a comment for an identifier and/or password.

The identifier could be, for example, the user's name, messaging address, or node phone number of the user attempting to post a comment. The password could be one chosen beforehand by the user wishing to post a comment. For example, the password might be the user's chosen password for checking voicemail. As another example, the user, in anticipation of wishing to post comments in the future, could have selected a password for posting purposes. A user wishing to select a password for posting purposes might do so, for example, via a website, portal, and/or the like, or via a customer service agent, customer service kiosk, and/or the like. The machine hosting the guestbook might check the validity of a received password by consulting an accessible store. Where, for instance, the machine hosting the guestbook is a central server or the like, the store might be directly accessible. Otherwise, accessing the store might involve accessing a central server or the like. Having received an identifier corresponding to the user attempting to post a comment and/or an identifier corresponding to her node, the machine hosting the guestbook could consult the listing. Where the guestbook is hosted by the node of the user corresponding to the guestbook, the listing could be, for instance, that node's connection log. In the case where the guestbook is hosted by a central server or the like, the central server or the like might maintain a mirror of the connection log stored on the node of the user corresponding to the guestbook. The mirror could be maintained in a number of ways. For example, the node could update the mirror log periodically and/or upon a change to the log.

Where a posting was found to be allowable, the machine hosting the guestbook could act to update the guestbook to include the new entry. It is noted that, for various embodiments of the invention, the machine could append to the entry one or more identifiers corresponding to the user who placed the posting and/or one or more identifiers corresponding to that user's node. Such an identifier could be, for example, one received by the machine as discussed above. Alternately, the machine might query the posting user, perhaps via a webpage form or popup box, for an identifier that should be listed with the posted entry. It is noted that, for various embodiments, a posting user might be able to specify that her posting be "anonymous". The machine hosting the guestbook might comply with such a request, for example, by appending no identifier to the guestbook entry and/or by appending a label marking the entry as an anonymous one.

It is noted that, for various embodiments of the invention, implementation of guestbook entry addition functionality might be involve, for example use of JSP (Java Server Pages), ASP (Active Server Pages), ASP.NET, and/or CGI (Common Gateway Interface) functionality. It is further noted that, for various embodiments of the present invention, hosted in addition to and/or instead of a user's guestbook could be screens, pages, and/or the like bearing information about the user. The information could be chosen by the user and/or a system administrator or other individual, and might include text, images, sounds, and/or the like. For example, images of the user, her friends, and/or her family might be included. As another example, text such as quotes and/or biographical information might be included. The information might, for example, be conveyed via a webpage. Such a webpage might be created using standard webpage creation tools and/or techniques known in the art.

Although the foregoing has discussed, for instance, comparison of address books and/or connection logs, it is noted that analogous comparison might alternately or additionally be performed with respect to other data. For instance, comparison might be performed with respect to media library possessions, media playlists, ringtones, and/or program library possessions (e.g., games). In such a comparison, playlist entries, media possessions, or the like could be recognized by identifiers. For example, in the case of a playlist of songs, the identifiers could be song titles. As another example, the identifiers could be media file identifiers registered to specific media services (e.g., a streaming media service such as RealOne). In a manner analogous to that discussed above, data (e.g., identifiers corresponding to playlist entries or media possessions) might be dispatched in a protected manner.

It is further noted that functionality analogous to that discussed above may be employed in additional settings and/or for additional purposes. For instance, similar functionality could be employed by a server, web service, website, or the like that seeks to find "matches" (e.g., friends and/or dates) for individuals. Accordingly, the determination that two individuals are a "match" could take into account, for instance, commonality of address book entries, connection logs, media playlists, ringtones, and/or program library possessions.

As alluded to above, data relating to address book entries, connection log entries, playlist entries, media library possessions, and the like could perhaps be dispatched in a protected manner.

Such data could, for instance, be dispatched in an encrypted manner using an encryption technique known in the art. Another possibility could be to employ a "double-salting" technique, such as in the following example. Although the following example will be with regard to address book entries and telephone numbers, an analogous approach could be applied to address book entries other than telephone numbers, and with respect to other than address books. Accordingly, an analogous approach could be applied with respect to, for example, connection log entries, playlist entries, and the like.

For this exemplary double-salting technique, imagine two parties, A and B, where A's node initiates contact with B's node for determination of the existence of common address book entries. Imagine that A has *n* phone numbers in her address book, A(1), ... A(i), ... A(n), and that B has *m* phone numbers in her address book: B(1), ..., B(j), ... B(m). Suppose that each phone number corresponds to a specific address book entry.

Suppose a unidirectional hash function H(x) is defined that has the property that H(x) = H(y) iff x = y. Unidirectional means, for instance, that it is not possible and/or is not computationally feasible to compute y when H(y) is known. The hash function could be, for instance, SHA (Secure Hash Algorithm) or MD5 (Message Digest 5).

Suppose further that a concatenation operator C() is defined that concatenates the bit representations of its arguments into a single bit representation. Suppose that this operator is reversible, provided that the lengths of the original arguments are known.

Upon A's node initiating contact with B's node, it could send a message or the like requesting that B's node sends the phone numbers of its user's address book using a specified random number R(A) to hide those phone numbers. In response, B's node could, perhaps after receiving permission from its user, choose a random number R(B) of its own and hide the phone numbers using R(B) and R(A). It may be desirable that the random numbers be long enough to prevent, for example, brute-force methods such as storing all possible variations. Accordingly, for various embodiments, the random numbers could be 128 bits long or longer.

Next, B's node could then send to A's node a list containing:
R(B), and a collection of B'(j),
where B'(j) = H( C(R(A), R(B), B(j)) )

Upon receiving the list, A's node could examine its user's address book and calculate:
A'(i), where A'(i) = H( C(R(A), R(B), A(i)) )

A's node could then compare all A'(i) with all B'(j). Where an A' (i) was determined to match a B' (j), A's node could know that A and B had a common address book entry. A's node might then access its user's address book, find the common entry, and display it to its user. In various embodiments, A's node might cache the A' to A relation during matching.

In the case where B was also interested in learning of common address book entries, A's node could send the list of matched contacts B'(j) or A' (i) to B's node, which could then similarly display the common contacts to its user.

It is noted that the selection of the random numbers at both A's node and at B's node could prevent, for instance, a malicious A's node from always sending a constant number to B's node and then reverse-engineering B's phonebook from the received list.

### Data Access Control

In various embodiments, a user may make data items available to other users. Such data may include, for instance, address book entries, web pages, media (e.g., images or music), and/or software. Such data might, for example, be stored on a node or other machine associated with the user. As alluded to above, in certain embodiments of the present invention, access to such data may be granted to other users in accordance with consideration of previous connections in which the machine associated with the user had previously been involved. Accordingly, such granting of access may involve, for instance, employing one or more rules relating to a communication log of the sort discussed above. Such rules might be established, for example, by the user making data items available.

For instance, the user might be presented with a GUI or other interface whereby she could specify access rules for the data items she was making available. Accordingly, the interface could list the data items and/or groups of those items and, for each item and/or group, a GUI or other element (e.g., a field or pull-down menu) whereby the user could specify the rule for that group and/or item. In certain embodiments, the element could provide the user with various preset access rules. Alternately or additionally, the element could allow the user to specify access rules of her own. In certain embodiments, the interface could be directly presented by the machine hosting the data (e.g., the user's node). Alternately, the machine hosting the data might act to have such an interface presented to the user via a remote machine. Such a remote implantation might involve the use of SOAP, RMI, JMS, or the like.

A variety of access rules are possible. For example, an access rule could specify that access to a certain item and/or group of items be limited to users whose nodes, according to the connection log, had previously connected with the node associated with the user. It is further noted that rules could take into account duration and/or frequency of connection, time and/or date of connection, the application and/or process that established a connection, the type and/or identity of data transferred during the connection, the physical location of the accessing or accessed machine during a connection, the identity of the accessing user, and/or the identity of the accessing machine.

For various embodiments, multiple rules could be stated for a particular item and/or group of items. It might be established, for example, that all rules stated for a particular item and/or group of items would need to be met for access to be allowed. Alternately, it might be established that only n of all the rules stated for a particular item and/or group of items would need to be met for access to be allowed, where n was defined to be a value less that the total number of rules. As a specific example, where rules A, B, and C were stated for a particular item and/or group of items, it might be established access would be allowed either where rule C was satisfied or where both rules A and B were satisfied.

As another example, an access rule could specify that access to a certain item and/or group of items be limited to users whose nodes, according to the connection log, had, with a specified frequency, previously connected with the node associated with the user. As yet another example, an access rule could specify that access to a certain item and/or group of items be limited to users whose nodes, according to the connection log, had previously connected to the node associated with the user, where at least a specified number of those previous connections had been of at least a specified duration.

As another example, a rule could be established whereby all users who, according to the connection log, had previously downloaded a particular item and/or group of items could be granted future access to those items. As a specific example, a rule could be established whereby all users who, according to the connection log, had previously downloaded data of type MP3 (MPEG audio layer 3) would be granted future access to data of type MP3. As a further example, a rule could be established whereby users who, according to the connection log, had previously participated in an electronic business card exchange with the user making data available could have future access to certain specified entries in that user's address book (e.g., the entries relating to the firm for which she works). It is noted that, in various embodiments, rules could state expiration dates for data access.

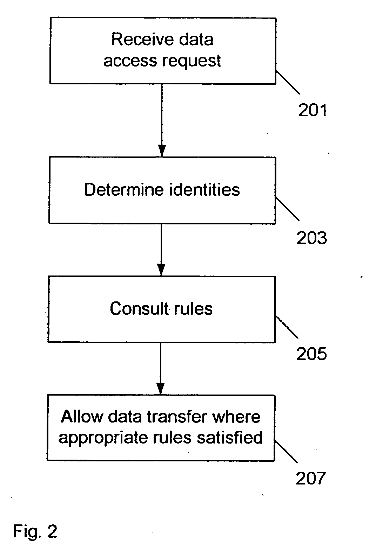

With respect to Fig. 2 it is noted that, upon receiving a data access request (step 201), the machine hosting the user's data could act to determine the data being requested and/or the identity of the accessing machine and/or its user (step 203). The identity of the accessing machine and/or its user could be determined, for example, in a manner similar to that discussed above. The identity of the data being requested could, for example, be extracted from the request.

The machine hosting the user's data could next act to consult any rules associated with the data being requested (step 205). The machine might then act to see if any rules needed to be met, accessing the connection log as necessary, perhaps in terms of a determined identity of the accessing machine and/or it user. In the case where the appropriate rules were found to be satisfied, the machine could act to allow the data transfer to take place (step 207). The machine hosting the user's data could make that data available in a number of ways. For instance, the data could be dispatched via OBEX OPP. As another example, the data could be dispatched by way of an HTTP server, FTP server, or the like running on the machine. For various embodiments of the present invention, the process performing connection logging could act to place in the log an entry corresponding so the data transfer. Where the appropriate rules could not be satisfied, the machine could act to prevent the transfer from taking place.

As just described, access to data that a user makes available to other users could be controlled with regard to previous connections in which the machine associated with the user had previously been involved. It is further noted that, for various embodiments of the present invention, such access might alternately or additionally be controlled with regard to consideration of the reputation of a user attempting access. For such embodiments, a user or other individual may act in a manner analogous to that described above to specify access rules for various data items she is making available, but with the rules relating to reputation.

For instance, such preset or user-defined access rules could specify that access to a certain item and/or group of items be limited to users having a reputation equal to or better than a stated reputation. Such a reputation might, for example, be stated numerically. For such a system, higher numerical values might articulate better reputations. Alternately, lower numerical values might articulate better reputations. As another example, such a reputation might be stated in terms of a word and/or phrase, the word or phrase perhaps being in a predetermined hierarchy of words and/or phrases articulating reputation level.

For various embodiments, reputation stated in a rule might be qualified with respect to a specified reputation category or the like. For such embodiments, there may be multiple categories. Such categories might include, for instance, "overall", "financial", "connection-based", "activity-based", "comment-based", and/or "website-based". It is noted that more specific categories might exist. For instance, categories might include "financial: credit card", "connection-based: wireless", "comment-based: guestbook", and/or "website-based: Website X" (where "X" is an identifier corresponding a particular website. Reputation categories will be discussed in greater detail below.

For embodiments where rules may be stated in terms of reputation, upon receiving an access request, the machine hosting the user's data could act in a manner analogous to that discussed above to determine the data being requested and/or the identity of the accessing machine and/or its user. Next, in a manner also analogous to that described above, the machine could act to consult any rules associated with the data being requested. For rules stated in terms of access, the machine could act as stated above, accessing a connection log as necessary.

For rules stated in terms of reputation, the machine might access, perhaps in terms of a determined identity of the accessing machine and/or its user, a server, store, or the like possessing and/or maintaining reputation data for one or more users and/or nodes. Such a server, store, or the like will be discussed in greater detail below. In the case where the appropriate rules associated with the data were satisfied, the machine hosting the user's data could, perhaps in a manner analogous to that discussed above, act to allow the data transfer to take place. Where the appropriate rules could not be satisfied, the machine could act to prevent the transfer from taking place.

As noted above, a server, store, or the like, may possess and/or maintain reputation data for one or more users and/or nodes. As also noted above, reputation categories may exist. These aspects will now be discussed in greater detail.

With regard to the server, store, or the like, it is noted that such an entity might, for example, be implemented as a central server. The server or the like could act, with respect to one or more users and/or nodes, to cull data from one or more sources in the process of determining one or more reputations for those users and/or nodes. For instance, the server or the like could cull data from websites (e.g., those having reputation systems), connection logs (e.g., connection logs of the sort noted above), activity logs, user opinions (e.g., opinions culled from a guestbook entries of the sort noted above, and/or opinions specifically collected by the server), and/or specialty databases and/or services (e.g., credit bureaus). For various embodiments, permission might need to be received from particular user before data would be culled with respect to that user and/or her node.

With regard to the activity log, it is noted that such an activity log may be implemented, for instance, as a daemon or other program running on a user's node which made log entries regarding activities performed by that user via her node, and which forwarded those log entries to the server or the like. Forwarding could involve, for example, use of RMI, JMS, and/or SOAP. Such activities might include, for instance, website use and/or communications activity (e.g., messaging and telephone calls).

For various embodiments, the server or the like might seek to distill such collected data to numerical values corresponding to reputation level. In certain cases, a source from which data is culled could directly provide a specific numerical value regarding reputation. For instance, a website having a reputation system might state a particular user's reputation as being "7-of-10", with "10" being the highest. A source might instead provide a non-numerical value which is hierarchical. For instance, a source might state a particular user's reputation as "veteran" where the categories are "new", "member", "veteran", and "expert", with "expert" being the highest ranking. For such situations, the server or the like might act to convert such non-numerical hierarchical labels into numerical values. Thus, with regard to the above example, the server or the like might convert a ranking of "new" to "1", "member" to "2", "veteran" to "3", and "expert" to "4".

For cases where the data collected was freeform (e.g., guestbook entries), the server or the like might perform one or more operations to determine a numerical value. For example, a guestbook entry could be scanned for certain words and/or phrases for which numerical values had been defined, and a reputation score calculated for the guestbook entry. As specific examples, the numerical value "3" could be defined for the phrase "great guy", while the numerical value "-5" might be defined for the phrase "hard to trust". Calculation of reputation score might involve, for example, computing the, perhaps weighted, mean, median, and/or mode for numerical values corresponding to words and/or phrases existing in the entry, computing a sum of those numerical values, or solving defined equation.

The numerical values corresponding to words and/or phrases, and/or the specification of how score should be calculated, might be established by a network administrator, personality expert (e.g., psychiatrist), and/or the like. Alternately or additionally, user testing might be employed in the determination of such numerical values and/or score calculation specifications. For instance, a group of users might each be presented with words and/or phrases, and asked to rate each word and/or phrase on a scale of 1 to 10 with "1" being "very unfavorable", "5" being "neither favorable or unfavorable", "10" being "very favorable", and the intervening values having labels corresponding intervening sentiments.

Reputation scores for connection logs, activity logs, and/or the like could be determined in a manner analogous to that discussed above with respect to guestbook entries or the like, but, for example, with numerical values being established for certain entries rather than words and/or phrases. For instance, the numerical value of "6" could be defined for performing a business card exchange.

Having collected and/or determined reputation values with respect to one or more sources, the server could calculate values for one or more reputation categories. For example, an "overall" category might, for instance, be computed as the, perhaps weighted, mean, median, or mode of all collected and/or determined reputation values. As another example, a "comment-based" category might, for instance, be computed as the, perhaps weighted, mean, median, or mode of all collected and/or determined reputation values corresponding to user comments.

The server or the like could store such computed category values in association with their corresponding users and/or nodes, and could make the values available to one or more entities. For example, the values could be made available to nodes controlling data access with respect to reputation-based rules as just described. As yet another example, the values to could be made available to websites. For various embodiments, the server could make reputation data other than category rules available to such entities. For example, such an entity might be able to request the collected and/or determined reputation value with respect to a particular website having a reputation system, or the collected and/or determined reputation value with respect to specified credit bureau. For various embodiments, the category value and/or other reputation data could be made available to nodes controlling data access and/or other entities in a number of ways. For example, the functionality for request of such data and/or the dispatch of such data might, perhaps, be implemented in a manner employing JMS, RMI, SOAP, and/or the like.

It is noted that, for various embodiments of the present invention, users may be able to set various privacy settings. For instance, a user might be able to specify the data sources consultable by the server or the like for reputation determination, and/or the data that may be collected from each of those sources. Where certain data is made unavailable to the server or the like due to such a setting, the server or the like might indicate this to requesting entities.

For example, it might be established that an entity seeking an "overall" reputation category value for a user that has embargoed certain data receive the value from the server or the like along with an indication that certain, perhaps specified, data was not taken into account in the computation of the value due to privacy settings. As another example, it might be established that certain reputation values not be computed and/or made available in the case where certain specified data was not available due to privacy settings. Accordingly, the entity seeking the "overall" reputation category value might receive an indication that specified data was not available due to privacy settings, and that, therefore, no value could be computed.

### Recognition of Previously-Met Individuals

As alluded to above, according to embodiments of the present invention, there are provided systems and methods wherein a node user may be able to learn if she is in the presence of one or more individuals that she had met before. Such embodiments may involve, for instance, determining if the user's node is in proximity of nodes that it had been in proximity of in the past.

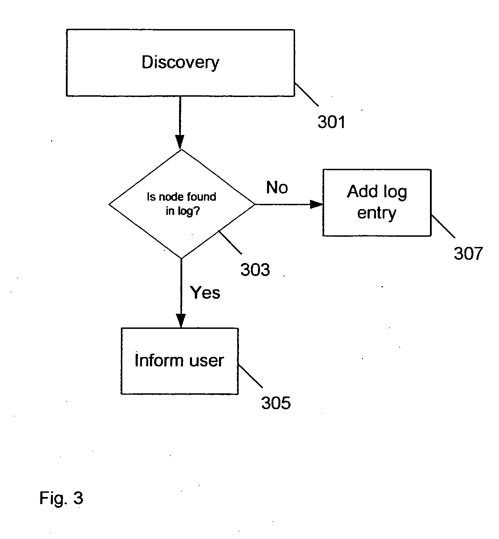

More specifically, it is noted with respect to Fig. 3 that a user's node may be configured to employ a network interface in discovering nearby nodes (step 301). The network interface might, for example, be a wireless interface such as, for example, a Bluetooth, 802.11a, 802.11b, 802.11g, IrDA, or UMTS interface. The interface might also be a wired network interface such as, for instance, an Ethernet or 1394 interface. The node might employ service discovery such as, for instance, Bluetooth device discovery in the location of nearby nodes.

In the case where a short-range communications are employed (e.g., where Bluetooth, IrDA, and/or ad-hoc 802.11a, 802.11b, or 802.11g, is employed), any discovered node might be considered to be a nearby node. Where Ethernet or the like is employed, a discovered node might only be considered a nearby node, for example, if it is attached to the same LAN (local area network) as the user's node.

As yet another example, a discovered node might only be considered nearby if it is located geographically near the user's node. For instance, the user's node might request from a discovered node that node's location. The user's node could then compare the discovered node's location with its own location and determine if the discovered node is nearby. The threshold for being "nearby" might be set, for instance, by a network administrator or the like. Location information could be provided, for instance, via GPS (global positioning system) hardware. As another example, location information could be provided via triangulation with respect to accessible network base stations and/or cell transmitters.

As still another example, location information could be provided in terms of one or more accessible network base stations and/or cell transmitters. In locating nearby nodes, the user's node could, perhaps via employed device discovery, learn of identifiers corresponding to those nodes.

Such a found node identifier might be, for instance, a network address (e.g., IP address) or a hardware address (e.g., MAC address or Bluetooth address). As will be discussed in greater detail below, the user's node could maintain a log or the like relating to various nodes that had been previously nearby. Recorded in the log by the user's node could be, for example, identifiers corresponding to the listed nodes. The log might be maintained on the user's node and/or be remote from the user's node. Accordingly, upon finding a nearby node, the user's node could employ an identifier corresponding to that nearby node in consulting the log (step 303).

In the case where the nearby node is found in the log, the user could be informed of this fact. For instance, the user's node could present her with an GUI dialog box or the like containing text indicating that the user was in the presence of someone she had met before (steps 303, 305). Various other techniques, including aural, visual, and/or vocal alerts, might alternately or additionally be employed to alert the user.

As noted above, the log might, for each recorded node, maintain an identifier corresponding to the node. As will be discussed in greater detail below, the user's node might record additional data in the log, for each listed node. Such additional data might include the time and/or date when the nearby node was discovered, an event associated with the discovery, an data corresponding to the location of the discovery, comments, and/or data corresponding to the nearby node's user (e.g., the user's name, messaging address, and/or image).

Accordingly, one or more of such additional data items could be included in the indication presented to the user. Further, with the indication, the user could be presented with an opportunity to add to the log comments regarding the meeting. For instance, The user could be presented with a GUI box in which comments could be entered, and the entered comments could be recorded in the log entry corresponding to the found node.

In various embodiments, upon finding a nearby node that had been found to be nearby before, the user's node could add an indication of such to the log. For example, the log might indicate for each listed node the number of times that node had discovered after the first discovery. It is noted that a certain amount of time might need to pass between discoveries of a particular node for those discoveries to be considered to be separate occurrences.

In the case where the user's node determines the nearby node to not be in the log, the user's node might act to add a corresponding log entry (steps 303, 307). In choosing whether or not to add an entry, certain factors may be taken into consideration. For example, the nearby node might only be recorded if it was nearby for greater than a specified period of time. The period of time might, for example, be specified by the user, or a network administrator or the like. As another example, the nearby node might, alternately or additionally, only be recorded if it was within a specified radius of the user's node. As yet another example, it could be specified that the nearby node only be recorded if it is associated with a specified company (e.g., the company that the user works for).

The user's node might determine fulfillment of the first exemplary criterion, for example, by periodically reattempting device discovery until the stated period of time had elapsed. The user's node might determine fulfillment of the second exemplary criterion, for example, by comparing its own location with the location of the found node. Such might, for instance, be achieved via GPS or the like in a manner analogous to that discussed above. Alternately, such might, for instance, be achieved by the user's node determining the signal strength of its connection to the found node, and translating such to physical distance. In performing the translation, the user's node might, for example, take into account pre-loaded knowledge of transmission characteristics.

Fulfillment of the third exemplary criterion might, for example, be achieved by having the user's node consult a store and/or server whereby to learn if the found node was associated with the specified company. Fulfillment might also be achieved, for example, by having the user's node parse an electronic business card, information card, and/or other data received from the found node. Criterions such as these exemplary ones could, for example, be set by the user, perhaps via a GUI or her node. Alternately, for example, such criterion could be set by a system administrator or the like.

As alluded to above, the user's node could record various items for the log entry corresponding to a found node. For example, if the user's node recorded an identifier corresponding to a found node, the identifier might be known by way of performed device discovery. As another example, if the user's node recorded the time and/or date when the nearby node was discovered, the time and/or date might, perhaps, be known to the user's node through consultation of an assessable time-of-day clock. As noted above, the user's node might record data relating to an event associated with discovery.

Accordingly, the user's node might consult a stored date book to determine if an event coincided with the time of discovery, and could record an indication of such an event. As a specific example, the date book might indicate that the "annual company get-together" was taking place at time of discovery, and the user's node could record a corresponding entry in the log. As another example, if the user's node recorded data corresponding to discovery location, the user's node might determine location, for example, via GPS and/or via one of the modes manners discussed above.

As a further example, if the user's node recorded in the log, information corresponding the found node's user, such information could be obtained in a number of ways. For example, the user's node could request such information from the found node. The found node might reply, for example, with the name, image, and/or messaging address of its user. Alternately or additionally, the found node might reply with an information card of the sort noted above. As yet another example, the user's node could request such information from a central server or the like maintaining such information. The server or the like could reply in a manner similar to that just attributed to the found node. In executing the request, the user's node might provide the server or the like with, for example, an identifier corresponding to the found node.

As noted above, a user being informed of being in the presence of someone she had met before might submit comments to be stored in the log. Further, when a log entry is created for a found node, the user could be presented by her node with an opportunity to make a comment regarding the entry. Such functionality could be implemented in a manner analogous to that discussed above.

As noted above, a user's node may act to search for nearby nodes. According to various embodiments of the invention, the user's node might perform the search when requested to by its user. The user might, for example, enter such a request via a GUI or the like associated with the node. Alternately or additionally, search might be performed automatically. Where performance is automatic, search may be constantly executed. Alternately, for example, search might be executed with a frequency that achieves a balance between high frequency of execution and energy conservation by the node. The node might act to calculate a frequency that achieves such a balance. As another example, automatic performance might occur in accordance with specifications set by the node's user, perhaps via a GUI associated with the node. For example, the user might specify that performance only occur when her node's profile is set to "meeting". As another example, the user might specify that occurrence only occur at times that the date book indicates that an event is in progress.

For various embodiments, a node's user might be able to set preferences regarding when log entries should be deleted. The user might set such preferences, for instance, by way of a GUI or the like associated with the node. The user might, for instance, specify that entries corresponding to a particular met user be deleted after meeting that user (e.g., her node being nearby that user's node) a specified number of times after first meeting that user. As yet another example, the node's user might specify that entries corresponding to a particular met user be deleted after a specified amount of time passes without again meeting that user.

As alluded to above, specification of a log entry deletion instruction may include specification of a met user. Such met user specification might be done in a number of ways. For instance, an identifier could be provided which would allow the node to find the appropriate entry or entries in the log. Such an identifier might be, for instance, a piece of data found in one or more of the appropriate log entries such as, for example, user name, device identifier, time of meeting, or place of meeting.

In various embodiments, the node's user may be able to view the log or portions thereof. Accordingly, the user could view, for example, dates, times, locations, notes, names, images, and/or other data relating to met individuals. Further, the user may be able to delete entries. Still further, the user might be able, for example, enter additional notes corresponding to log entries. Such not entry functionality could be implemented in a manner analogous to that discussed above.

Further, in various embodiments may allow the user to set preferences regarding when she should be notified that she is in the presence of someone she met before. For example, the user might specify that she be notified upon meeting a person for the second time, but never again. As another example, the user might specify that she be notified if an specified period of time had elapsed since last meeting a person. As yet another example, the user might specify that she only be notified with regard to certain specified individuals. As still another example, the user might specify that she be notified with regard to all but certain specified people. As above, specification of such an individual might be done by having the node's user provide an identifier that would allow her node to find the appropriate entry or entries in the log.

For various embodiments of the invention, one or more tasks or the like could be set to take place upon the initial meeting of an individual (i.e., discovery of the individual's node as nearby) and/or subsequent meetings of that individual (i.e., subsequent discovery of that node as nearby). For instance, it might be established that a business card exchange occur upon the initial meeting of an individual. Such card exchange might, for instance, employ OBEX OPP. As a more specific example, it might be established that a business card exchange occur upon the initial meeting of an individual in the case where that both individuals possess a specified cryptologic key.

Specification of such tasks to be performed might be done, for instance, by the node user or a system administrator, perhaps via a GUI or the like.

### Hardware and Software

Certain devices employed in accordance with the present invention may be implemented using computers. For example, the above-noted nodes may be implemented using network-capable computers. Accordingly, a user's node could be a wireless terminal. Furthermore, certain procedures and the like described herein may be executed by or with the help of computers. The phrases "computer", "general purpose computer", and the like, as used herein, refer but are not limited to a processor card smart card, a media device, a personal computer, an engineering workstation, a PC, a Macintosh, a PDA, a wired or wireless terminal, a server, a network access point, a network multicast point, or the like, perhaps running an operating system such as OS X, Linux, Darwin, Windows CE, Windows XP, Palm OS, Symbian OS, or the like, perhaps with support for Java or .Net.

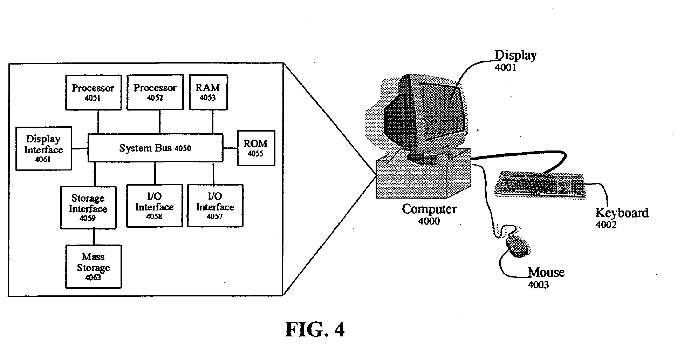

The phrases "general purpose computer", "computer", and the like also refer, but are not limited to, one or more processors operatively connected to one or more memory or storage units, wherein the memory or storage may contain data, algorithms, and/or program code, and the processor or processors may execute the program code and/or manipulate the program code, data, and/or algorithms. Accordingly, exemplary computer 4000 as shown in Fig. 4 includes system bus 4050 which operatively connects two processors 4051 and 4052, random access memory (RAM) 4053, read-only memory (ROM) 4055, input output (I/O) interfaces 4057 and 4058, storage interface 4059, and display interface 4061. Storage interface 4059 in turn connects to mass storage 4063. Each of I/O interfaces 4057 and 4058 may be an Ethernet, IEEE 1394, IEEE 1394b, IEEE 802.11a, IEEE 802.11b, IEEE 802.11g, Bluetooth, terrestrial digital video broadcast (DVB-T), satellite digital video broadcast (DVB-S), digital audio broadcast (DAB), general packet radio service (GPRS), universal mobile telecommunications service (UMTS), or other interface known in the art.

Mass storage 4063 may be a hard drive, optical drive, or the like. Processors 4057 and 4058 may each be a commonly known processor such as an IBM or Motorola PowerPC, an AMD Athlon, an AMD Opteron, an Intel ARM, an Intel XScale, a Transmeta Crusoe, or an Intel Pentium. Computer 4000 as shown in this example also includes an display unit 4001, a keyboard 4002 and a mouse 4003. In alternate embodiments, keyboard 4002, and/or mouse 4003 might be replaced and/or augmented with a touch screen, pen, and/or keypad interface. Computer 4000 may additionally include or be attached to card readers, DVD drives, or floppy disk drives whereby media containing program code may be inserted for the purpose of loading the code onto the computer.

In accordance with the present invention, a computer may run one or more software modules designed to perform one or more of the above-described operations, the modules being programmed using languages such as Java, Objective C, C, C#, and/or C++ according to methods known in the art. It is noted that any described division of operations among particular software modules is for purposes of illustration, and that alternate divisions of operation may be employed. Accordingly, operations discussed as being performed by one software module might instead be performed by a plurality of software modules. Similarly, operations discussed as being performed by a plurality of modules might instead be performed by a single module.

Further, although embodiments of the invention disclose certain software modules as operating on certain devices, in alternate embodiments these modules might be distributed to run on other devices than those stated. For example, operations disclosed as being performed by a particular user node might instead be performed by a plurality of user nodes and/or other devices. It is further noted that, in various embodiments, grid computing techniques may be employed.

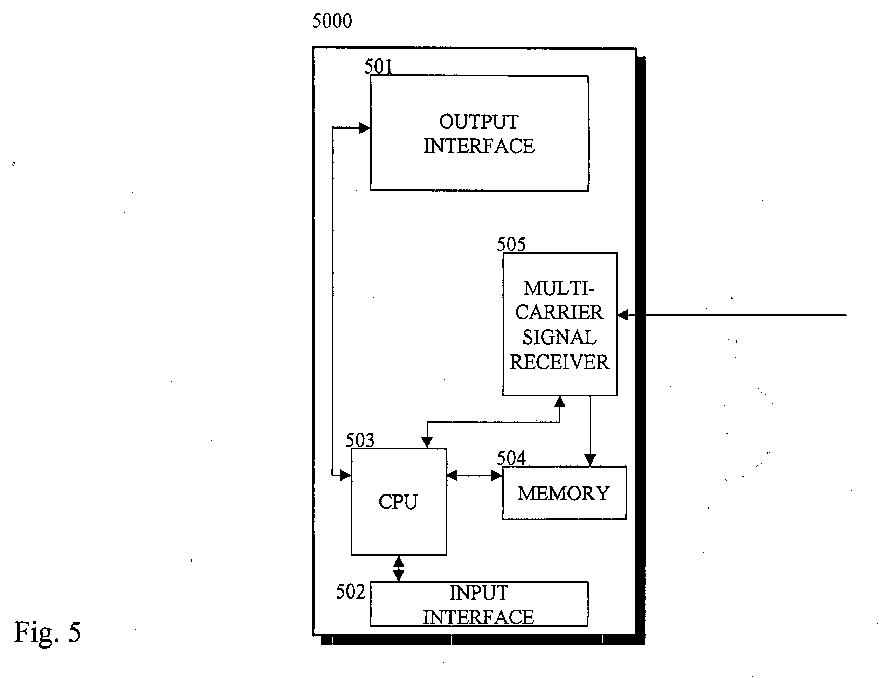

Shown in Fig. 5 is a functional block diagram of an exemplary terminal employable in various embodiments of the present invention. The terminal of Fig. 5 has been discussed in the foregoing. In the following, corresponding reference signs have been applied to corresponding parts. Terminal 5000 of Fig. 5 may be used in any/all of the embodiments described herein. The terminal 5000 comprises a processing unit CPU 503, a multi-carrier signal terminal part 505 and a user interface (501, 502). The multi-carrier signal terminal part 505 and the user interface (501, 502) are coupled with the processing unit CPU 503. One or more direct memory access (DMA) channels may exist between multi-carrier signal terminal part 505 and memory 504. The user interface (501, 502) comprises a display and a keyboard to enable a user to use the terminal 5000. In addition, the user interface (501, 502) comprises a microphone and a speaker for receiving and producing audio signals. The user interface (501, 502) may also comprise voice recognition (not shown).

The processing unit CPU 503 comprises a microprocessor (not shown), memory 504 and possibly software. The software can be stored in the memory 504. The microprocessor controls, on the basis of the software, the operation of the terminal 5000, such as the receiving of the data stream, the tolerance of the impulse burst noise in the data reception, displaying output in the user interface and the reading of inputs received from the user interface. The operations are described above. The hardware contains circuitry for detecting the signal, circuitry for demodulation, circuitry for detecting the impulse, circuitry for blanking those samples of the symbol where significant amount of impulse noise is present, circuitry for calculating estimates, and circuitry for performing the corrections of the corrupted data.

Still referring to Fig. 5, alternatively, middleware or software implementation can be applied. The terminal 5000 can be a hand-held device which the user can comfortably carry. Advantageously, the terminal 5000 can be a cellular mobile phone which comprises the multi-carrier signal terminal part 505 for receiving the multicast transmission stream. Therefore, the terminal 5000 may possibly interact with the service providers.

### Ramifications and Scope

Although the description above contains many specifics, these are merely provided to illustrate the invention and should not be construed as limitations of the invention's scope. Thus it will be apparent to those skilled in the art that various modifications and variations can be made in the system and processes of the present invention without departing from the spirit or scope of the invention.

## Claims

**1.** A method for facilitating social connection, comprising:
considering elements of a body of personal data corresponding to a first user;
considering elements of a body of personal data corresponding to a second user; and
in the case where the body of personal data corresponding to the first user and the body of personal data corresponding to the second user are found to share one or more common elements, considering said first user and said second user to be socially related.

**2.** The method of claim 1, wherein the bodies of personal data are address books.

**3.** The method of claim 2, wherein said first user and said second user are considered to have common acquaintances in the case where the body of personal data corresponding to the first user and the body of personal data corresponding to the second user are found to share one or more common elements.

**4.** The method of claim 2, wherein said first user and said second user are considered to have common interests in the case where the body of personal data corresponding to the first user and the body of personal data corresponding to the second user are found to share one or more common elements.

**5.** The method of claim 1, wherein the bodies of personal data are connection logs. corresponding to the first user and the body of personal data corresponding to the second user are found to share one or more common elements.

**7.** The method of claim 5, wherein said connection logs contain elements corresponding to one or more of messaging connections, telephonic connections, data transfer connections, and query connections.

**8.** The method of claim 1, wherein the bodies of personal data are play lists.

**9.** The method of claim 1, wherein at least one of said users may indicate that one or more specified body of personal data elements not be considered.

**10.** A method for controlling data access, comprising:
receiving from a node a request for a data item stored on a node associated with a user;
searching a log for an entry corresponding to the requesting node, the log having entries corresponding to nodes previously in communication with said node associated with said user; and
providing said data item to said requesting node in the case where one or more specified criteria are met.
with said node associated with said user.

**12.** The method of claim 10, wherein the one or more specified criteria include a criterion specifying that said log indicate that the requesting node had, for a specified period of time, previously been in communication with said node associated with said user.

**13.** The method of claim 10, wherein the one or more specified criteria include a criterion specifying that said log indicate that the requesting node had, with a specified frequency, previously been in communication with said node associated with said user.

**14.** The method of claim 10, wherein the one or more specified criteria include a criterion specifying that said log indicate that the requesting node had, for transfer of data of a specified type, previously been in communication with said node associated with said user.

**15.** The method of claim 10, wherein the one or more specified criteria include a criterion specifying that a user of said requesting node have a reputation satisfying an indicated reputation requirement.

**16.** A method for aiding a user in social interaction, comprising:
finding a node nearby a node of said user;
searching a log for an entry corresponding to the nearby node, the log having

**17.** The method of claim 16, further comprising:
in the case where said log was found to have no entry corresponding to the nearby node, creating a new entry in said log, the new entry corresponding to the nearby node.

**18.** The method of claim 16, wherein a log entry corresponding to a particular node indicates the number of times that the particular node had been nearby the node of said user.

**19.** The method of claim 16, wherein notifying is in compliance with one or more rules set by said user.

**20.** The method of claim 16, wherein notifying includes providing an identifier corresponding to a user corresponding to said nearby node.

**21.** A system for facilitating social connection, comprising:
a memory having program code stored therein; and
a processor operatively connected to said memory for carrying out instructions in accordance with said stored program code;
wherein said program code, when executed by said processor, causes said processor to perform the steps of:
considering elements of a body of personal data corresponding to a first user;
in the case where the body of personal data corresponding to the first user and the body of personal data corresponding to the second user are found to share one or more common elements, considering said first user and said second user to be socially related.

**22.** The system of claim 21, wherein the bodies of personal data are address books.

**23.** The system of claim 22, wherein said first user and said second user are considered to have common acquaintances in the case where the body of personal data corresponding to the first user and the body of personal data corresponding to the second user are found to share one or more common elements.

**24.** The system of claim 22, wherein said first user and said second user are considered to have common interests in the case where the body of personal data corresponding to the first user and the body of personal data corresponding to the second user are found to share one or more common elements.

**25.** The system of claim 21, wherein the bodies of personal data are connection logs.

**26.** The system of claim 25, wherein said first user and said second user are considered to have commonly met one or more individuals in the case where the body of personal data corresponding to the first user and the body of personal data corresponding to the second user are

**27.** The system of claim 25, wherein said connection logs contain elements corresponding to one or more of messaging connections, telephonic connections, data transfer connections, and query connections.

**28.** The system of claim 21, wherein the bodies of personal data are play lists.

**29.** The system of claim 21, wherein at least one of said users may indicate that one or more specified body of personal data elements not be considered.

**30.** A system for controlling data access, comprising:
a memory having program code stored therein; and
a processor operatively connected to said memory for carrying out instructions in accordance with said stored program code;
wherein said program code, when executed by said processor, causes said processor to perform the steps of:
receiving from a node a request for a data item stored on a node associated with a user;
searching a log for an entry corresponding to the requesting node, the log having entries corresponding to nodes previously in communication with said node associated with said user; and
providing said data item to said requesting node in the case where one or more

**31.** The system of claim 30, wherein the one or more specified criteria include a criterion specifying that said log indicate that the requesting node had previously been in communication with said node associated with said user.

**32.** The system of claim 30, wherein the one or more specified criteria include a criterion specifying that said log indicate that the requesting node had, for a specified period of time, previously been in communication with said node associated with said user.

**33.** The system of claim 30, wherein the one or more specified criteria include a criterion specifying that said log indicate that the requesting node had, with a specified frequency, previously been in communication with said node associated with said user.

**34.** The system of claim 30, wherein the one or more specified criteria include a criterion specifying that said log indicate that the requesting node had, for transfer of data of a specified type, previously been in communication with said node associated with said user.

**35.** The system of claim 30, wherein the one or more specified criteria include a criterion specifying that a user of said requesting node have a reputation satisfying an indicated reputation requirement.

**36.** A system for aiding a user in social interaction, comprising:
accordance with said stored program code;
wherein said program code, when executed by said processor, causes said processor to perform the steps of:
finding a node nearby a node of said user;
searching a log for an entry corresponding to the nearby node, the log having entries corresponding to nodes previously nearby said node of said user; and
notifying said user in the case where said entry is found in said log.

**37.** The system of claim 36, wherein said processor further performs the step of:
in the case where said log was found to have no entry corresponding to the nearby node, creating a new entry in said log, the new entry corresponding to the nearby node.

**38.** The system of claim 36, wherein a log entry corresponding to a particular node indicates the number of times that the particular node had been nearby the node of said user.

**39.** The system of claim 36, wherein notifying is in compliance with one or more rules set by said user.

**40.** The system of claim 36, wherein notifying includes providing an identifier corresponding to a user corresponding to said nearby node.
